# DEMANDE DE BREVET EUROPEEN

(11) **EP 4 070 989 A1**
(43) Date de publication de la demande: **12.10.2022**
(21) Numéro de dépôt: 22166836.1
(22) Date de dépôt: 05.04.2022
(51) Int. Cl.: B60N 2/818

(54) **APPUI-TÊTE DE SIÈGE DE VÉHICULE AUTOMOBILE**

(30) Priorité: 06.04.2021 FR 2103514
(71) Demandeur: TESCA France, 92977 Paris La Défense Cedex (FR)
(72) Inventeur: GEORGES, Laurent, 92977 Paris La Défense Cedex (FR)
(74) Mandataire: Sayettat, Julien Christian

(57) **Abrégé**

Appui-tête (1) de siège de véhicule automobile, ledit appui-tête comprenant deux branches (2) métalliques pourvue chacune d'une goupille anti-rotation sous forme d'une tige métallique (12) la traversant pour définir au moins une saillie radiale (9), ladite saillie s'insérant dans au moins une fente principale (15) prévue dans le boitier (3) le long du conduit (4) correspondant, chaque fente principale (15) étant renforcée par un moyen de renfort respectif (16) en forme générale d'anneau oblong définissant une fente secondaire (17), ledit moyen de renfort étant à base d'un deuxième matériau présentant une dureté, un point de fusion et une résistance à la traction supérieurs à ceux du premier matériau formant ledit boîtier, ledit moyen de renfort s'emboitant dans ladite fente principale avec mise en regard desdites fentes principale et secondaire.

## Description

L'invention concerne un appui-tête de siège de véhicule automobile.

Il est connu de réaliser un appui-tête de siège de véhicule automobile, ledit appui-tête comprenant :
- deux branches métalliques parallèles et séparées l'une de l'autre, destinées à être montées en haut de dossier dudit siège,
- un boitier, à base d'un premier matériau plastique moulé, destiné à absorber l'énergie en cas de choc de la tête d'un passager sur ledit appui-tête, ledit boitier présentant deux conduits issus de moulage, chacun desdits conduits recevant une desdites branches respective en coulissement, de manière à permettre un réglage en hauteur dudit boitier, chacun desdits conduits étant pourvu d'un palier haut et d'un palier bas exerçant tous deux un contact serrant sur chacune desdites branches, lesdits paliers étant moulés d'un bloc avec lesdits conduits et présentant en leur périphérie deux pattes flexibles diamétralement opposées,
- un ressort de rappel respectif monté sur chacun desdits paliers pour rappeler lesdites pattes correspondantes vers lesdites branches, ledit ressort présentant une forme générale de U ou de C venant en appui sur chacune desdites pattes de manière à réaliser un pincement desdites branches entre lesdites pattes,
- un dispositif de verrouillage dudit boitier par rapport auxdites branches selon une pluralité de positions verticales, de manière à verrouiller le réglage en hauteur choisi pour ledit boitier,
sachant que :
- chacune desdites branches est pourvue d'une goupille anti-rotation sous forme d'une tige métallique la traversant pour définir au moins une saillie radiale,
- ladite saillie s'insère dans au moins une fente principale prévue dans ledit boitier le long du conduit correspondant, de manière à pouvoir coulisser dans ladite fente principale lors du réglage en hauteur dudit boitier.

On précise ici que le fait que les branches soient séparées l'une de l'autre signifie qu'elles ne sont pas reliées de manière fixe l'une à l'autre, comme ce peut être le cas quand une traverse, par exemple métallique, relie leurs extrémités supérieures.

Des branches séparées peuvent présenter une certaine capacité de débattement transversal l'une par rapport à l'autre.

On s'affranchit de la sorte, dans une certaine mesure, des problèmes de dilatation transversale du boitier avec la chaleur qui pourraient nuire au bon coulissement dudit boitier par rapport aux branches.

On notera que le contact serrant exercé par les paliers sur les branches permet de limiter les bruits de vibrations, et aussi le risque d'arc-boutement pouvant nuire au bon coulissement du boitier sur lesdites tiges lorsque l'on opère son réglage en hauteur.

Par ailleurs, le fait de pourvoir chacune des branches d'une goupille anti-rotation coopérant avec au moins une fente principale prévue dans le boitier permet d'empêcher une rotation desdites branches par rapport audit boitier.

En effet, une telle rotation serait susceptible de désactiver le dispositif de verrouillage du boitier qui ne serait alors plus bloqué en hauteur, ce qui est néfaste en matière de sécurité pour l'occupant du siège.

Cependant, le boitier est usuellement réalisé à base d'un matériau de faibles performances techniques, présentant une dureté, un point de fusion et une résistance à la traction de faibles valeurs, un tel choix étant essentiellement dicté par des raisons économiques et de bonne absorption en cas de choc de la tête de l'occupant du siège.

Par conséquent, une amorce de rotation violente imprimée aux branches peut conduire à une dégradation du boitier - ceci par pénétration des saillies dans les parois latérales des fentes principales -, ledit boitier ne pouvant alors plus assurer le blocage en rotation desdites branches.

L'invention a pour but de proposer un agencement permettant de pallier cet inconvénient afin d'assurer, de façon robuste et économique, le blocage en rotation des branches par rapport au boitier.

A cet effet, l'invention propose un appui-tête de siège de véhicule automobile, ledit appui-tête comprenant :
- deux branches métalliques parallèles et séparées l'une de l'autre, destinées à être montées en haut de dossier dudit siège,
- un boitier, à base d'un premier matériau plastique moulé, destiné à absorber l'énergie en cas de choc de la tête d'un passager sur ledit appui-tête, ledit boitier présentant deux conduits issus de moulage, chacun desdits conduits recevant une desdites branches respective en coulissement, de manière à permettre un réglage en hauteur dudit boitier, chacun desdits conduits étant pourvu d'un palier haut et d'un palier bas exerçant tous deux un contact serrant sur chacune desdites branches, lesdits paliers étant moulés d'un bloc avec lesdits conduits et présentant en leur périphérie deux pattes flexibles diamétralement opposées,
- un ressort de rappel respectif monté sur chacun desdits paliers pour rappeler lesdites pattes correspondantes vers lesdites branches, ledit ressort présentant une forme générale de U ou de C venant en appui sur chacune desdites pattes de manière à réaliser un pincement desdites branches entre lesdites pattes,
- un dispositif de verrouillage dudit boitier par rapport auxdites branches selon une pluralité de positions verticales, de manière à verrouiller le réglage en hauteur choisi pour ledit boitier,

sachant que :
   - chacune desdites branches est pourvue d'une goupille anti-rotation sous forme d'une tige métallique la traversant pour définir au moins une saillie radiale,
   - ladite saillie s'insère dans au moins une fente principale prévue dans ledit boitier le long du conduit correspondant, de manière à pouvoir coulisser dans ladite fente principale lors du réglage en hauteur dudit boitier,
sachant que chaque fente principale est renforcée par un moyen de renfort respectif en forme générale d'anneau oblong définissant une fente secondaire de forme analogue à ladite fente principale, ledit moyen de renfort étant à base d'un deuxième matériau présentant une dureté, un point de fusion et une résistance à la traction supérieurs à ceux dudit premier matériau, ledit moyen de renfort s'emboitant dans ladite fente principale avec mise en regard desdites fentes principale et secondaire, de manière à empêcher une pénétration desdites saillies dans ledit boitier et sa dégradation en cas d'amorce de rotation de ladite branche correspondante.

Dans cette description, les termes de positionnement dans l'espace (haut, bas, longitudinal, transversal, vertical, horizontal, latéral, ...) sont pris en référence à un appui-tête monté dans le véhicule.

Les termes « axialement », «diamétralement», «radial» sont quant à eux considérés relativement à l'axe général d'extension d'une branche.

Avec l'agencement proposé, on empêche, de par la présence des moyens de renfort, une pénétration des saillies dans le boitier, et donc sa dégradation en cas d'amorce de rotation violente imprimée à la branche correspondante, ceci suite à un choc violent de la tête d'un passager sur l'appui-tête.

D'autres particularités et avantages de l'invention apparaîtront dans la description qui suit, faite en référence aux figures jointes, dans lesquelles :

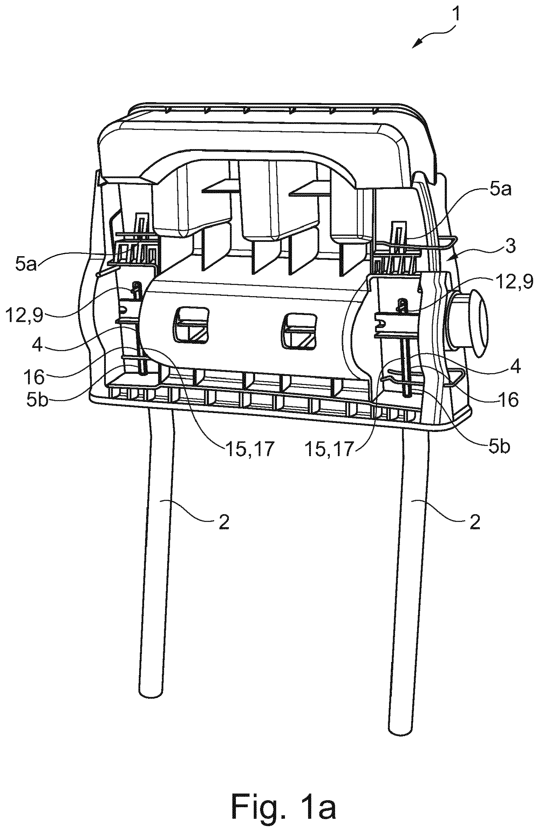

[Fig.1a] et

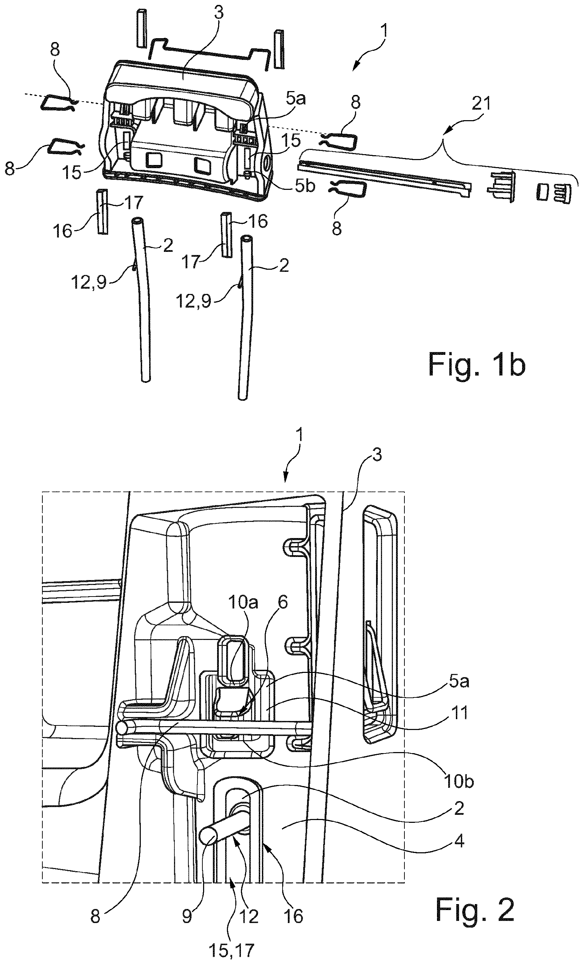

[Fig.1b] sont des vues schématiques générales partielles en perspective d'un appui-tête selon une réalisation, en vue non éclatée (figure 1a) et en vue éclatée (figure 1b),
[Fig.2] est une vue de détail de la figure 1a,
[Fig.3] est une vue en perspective d'une branche pourvue d'une goupille et des moyens de renfort coopérant avec elle,
[Fig.4a] et
[Fig.4b] sont des vues schématiques en coupe horizontale partielle de l'appui-tête représenté dans les figures précédentes, au niveau d'une goupille (figure 4a) et au niveau du dispositif de verrouillage (figure 4b),
[Fig.5] est une vue de détail de la figure 4a.

En référence aux figures, on décrit un appui-tête 1 de siège de véhicule automobile, ledit appui-tête comprenant :
- deux branches 2 métalliques parallèles - notamment tubulaires - et séparées l'une de l'autre, destinées à être montées en haut de dossier dudit siège,
- un boitier 3, à base d'un premier matériau plastique - par exemple à base de polyéthylène haute densité (PEHD) - moulé, destiné à absorber l'énergie en cas de choc de la tête d'un passager sur ledit appui-tête, ledit boitier présentant deux conduits 4 issus de moulage, chacun desdits conduits recevant une desdites branches respective en coulissement, de manière à permettre un réglage en hauteur dudit boitier, chacun desdits conduits étant pourvu d'un palier haut 5a et d'un palier bas 5b exerçant tous deux un contact serrant sur chacune desdites branches, lesdits paliers étant moulés d'un bloc avec lesdits conduits et présentant en leur périphérie deux pattes flexibles 6 diamétralement opposées - ici selon une direction longitudinale,
- un ressort de rappel 8 respectif monté sur chacun desdits paliers pour rappeler lesdites pattes correspondantes vers lesdites branches, ledit ressort présentant une forme générale de U ou de C venant en appui sur chacune desdites pattes de manière à réaliser un pincement desdites branches entre lesdites pattes,

sachant que :
   - chacune desdites branches est pourvue d'une goupille anti-rotation sous forme d'une tige métallique 12 la traversant pour définir au moins une saillie radiale 9,
   - ladite saillie s'insère dans au moins une fente principale 15 prévue dans ledit boitier le long du conduit 4 correspondant, de manière à pouvoir coulisser dans ladite fente principale lors du réglage en hauteur dudit boitier,
sachant que chaque fente principale 15 est renforcée par un moyen de renfort respectif 16 en forme générale d'anneau oblong définissant une fente secondaire 17 de forme analogue à ladite fente principale, ledit moyen de renfort étant à base d'un deuxième matériau présentant une dureté (mesurée notamment selon la norme DIN-EN-ISO-868 permettant de définir la dureté Shore D), un point de fusion (mesuré notamment selon la norme ISO 11357-3) et une résistance à la traction (mesurée notamment selon la norme DIN-EN-ISO 527) supérieurs à ceux dudit premier matériau, ledit moyen de renfort s'emboitant dans ladite fente principale avec mise en regard desdites fentes principale et secondaire, de manière à empêcher une pénétration desdites saillies dans ledit boitier et sa dégradation en cas d'amorce de rotation de ladite branche correspondante.

Selon la réalisation représentée, une tige métallique 12 traverse la branche 2 de part en part pour définir deux saillies 9 diamétralement opposées s'insérant dans deux fentes principales 15 respectives diamétralement opposées prévues le long du conduit 4 correspondant.

Selon la réalisation représentée, les pattes 6 sont reliées au reste du boitier 3 par une première extrémité 10a de manière à définir dans ledit boitier une fente 11 en forme générale de U permettant la flexion desdites pattes vers l'intérieur pour qu'elles s'appuient selon leur deuxième extrémité 10b sur la branche 2 correspondante.

Selon la réalisation représentée, le deuxième matériau est un matériau plastique, le moyen de renfort 16 étant obtenu par moulage.

Selon diverses réalisations, le deuxième matériau est à base de polyoxyméthylène (POM), de polyamide 6 (PA 6) ou de polyamide 6.6 (PA 6.6).

Selon une variante, le moyen de renfort 16 est en métal.

Selon la réalisation représentée, le moyen de renfort 16 comprend au moins un harpon 18, de manière à empêcher son déboitement.

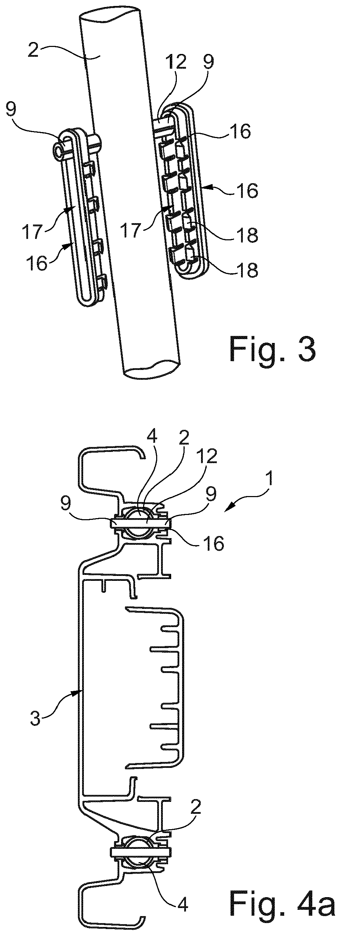

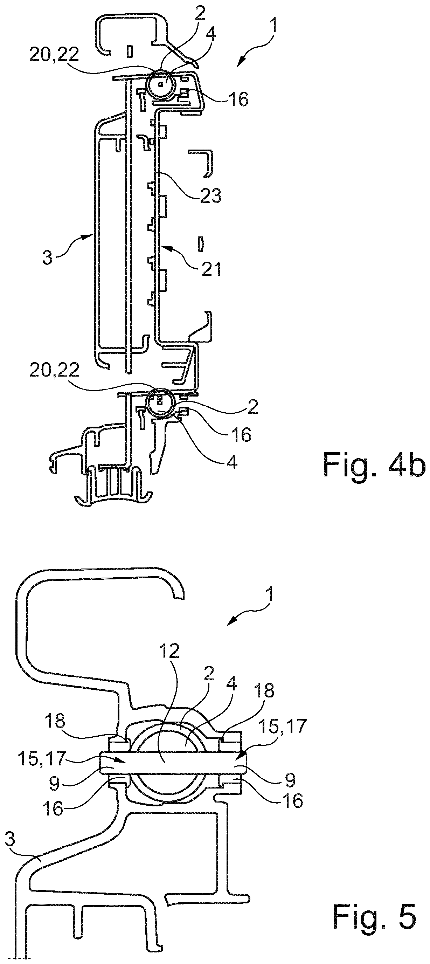

Selon la réalisation représentée, le dispositif de verrouillage 21 comprend :
- une branche 2 - et notamment les deux selon la réalisation représentée - pourvue de crans 20 de réglage s'étageant axialement,
- une partie de verrouillage 22 - sous forme de portion de fil 23 en métal à ressort, selon la réalisation représentée - montée mobile - ici par flexion - par rapport audit boitier entre une position de verrouillage, où ladite partie s'insère dans un desdits crans (figure 4b), et une position de déverrouillage, où ladite partie se retire dudit cran afin de libérer le coulissement de ladite branche.

## Revendications

1. Appui-tête (1) de siège de véhicule automobile, ledit appui-tête comprenant :
• deux branches (2) métalliques parallèles et séparées l'une de l'autre, destinées à être montées en haut de dossier dudit siège,
• un boitier (3), à base d'un premier matériau plastique moulé, destiné à absorber l'énergie en cas de choc de la tête d'un passager sur ledit appui-tête, ledit boitier présentant deux conduits (4) issus de moulage, chacun desdits conduits recevant une desdites branches respective en coulissement, de manière à permettre un réglage en hauteur dudit boitier, chacun desdits conduits étant pourvu d'un palier haut (5a) et d'un palier bas (5b) exerçant tous deux un contact serrant sur chacune desdites branches, lesdits paliers étant moulés d'un bloc avec lesdits conduits et présentant en leur périphérie deux pattes flexibles (6) diamétralement opposées,
• un ressort de rappel (8) respectif monté sur chacun desdits paliers pour rappeler lesdites pattes correspondantes vers lesdites branches, ledit ressort présentant une forme générale de U ou de C venant en appui sur chacune desdites pattes de manière à réaliser un pincement desdites branches entre lesdites pattes,
• un dispositif de verrouillage (21) dudit boitier par rapport auxdites branches selon une pluralité de positions verticales, de manière à verrouiller le réglage en hauteur choisi pour ledit boitier,
sachant que :
• chacune desdites branches est pourvue d'une goupille anti-rotation sous forme d'une tige métallique (12) la traversant pour définir au moins une saillie radiale (9),
• ladite saillie s'insère dans au moins une fente principale (15) prévue dans ledit boitier le long du conduit (4) correspondant, de manière à pouvoir coulisser dans ladite fente principale lors du réglage en hauteur dudit boitier,
ledit appui-tête étant **caractérisé en ce que** chaque fente principale (15) est renforcée par un moyen de renfort respectif (16) en forme générale d'anneau oblong définissant une fente secondaire (17) de forme analogue à ladite fente principale, ledit moyen de renfort étant à base d'un deuxième matériau présentant une dureté, un point de fusion et une résistance à la traction supérieurs à ceux dudit premier matériau, ledit moyen de renfort s'emboitant dans ladite fente principale avec mise en regard desdites fentes principale et secondaire, de manière à empêcher une pénétration desdites saillies dans ledit boitier et sa dégradation en cas d'amorce de rotation de ladite branche correspondante.

2. Appui-tête selon la revendication 1, **caractérisé en ce qu'**une tige métallique (12) traverse la branche (2) de part en part pour définir deux saillies (9) diamétralement opposées s'insérant dans deux fentes principales (15) respectives diamétralement opposées prévues le long du conduit (4) correspondant.

3. Appui-tête selon l'une des revendications précédentes, **caractérisé en ce que** le deuxième matériau est un matériau plastique, le moyen de renfort (16) étant obtenu par moulage.

4. Appui-tête selon la revendication 3, **caractérisé en ce que** le deuxième matériau est à base de polyoxyméthylène (POM), de polyamide 6 (PA 6) ou de polyamide 6.6 (PA 6.6).

5. Appui-tête selon l'une quelconque des revendications précédentes, **caractérisé en ce que** le moyen de renfort (16) comprend au moins un harpon (18), de manière à empêcher son déboitement.

6. Appui-tête selon l'une quelconque des revendications précédentes, **caractérisé en ce que** le dispositif de verrouillage (21) comprend :
• une branche (2) pourvue de crans (20) de réglage s'étageant axialement,
• une partie de verrouillage (22) montée mobile par rapport audit boitier entre une position de verrouillage, où ladite partie s'insère dans un desdits crans, et une position de déverrouillage, où ladite partie se retire dudit cran afin de libérer le coulissement de ladite branche.
